# EUROPEAN PATENT SPECIFICATION

(11) **EP 2 521 766 B1**
(45) Date of publication and mention of the grant of the patent: **30.01.2019**
(21) Application number: 10840644.8
(22) Date of filing: 30.12.2010
(51) Int. Cl.: C11D 9/02, B01D 17/04, B01D 19/02, D21C 3/28, D21C 11/00

(54) **TALL OIL PITCH COMPOSITION, METHOD OF PRODUCING THE SAME AND USES THEREOF**
TALLÖLPECHZUSAMMENSETZUNG, VERFAHREN ZU DEREN HERSTELLUNG UND VERWENDUNGEN DAVON
COMPOSITION DE BRAI DE TALLÖL, PROCÉDÉ DE PRODUCTION DE CELLE-CI ET UTILISATIONS DE CELLE-CI

(30) Priority: 30.12.2009 FI 20096410
(43) Date of publication of application: 14.11.2012
(73) Proprietor: Forchem Oyj, 26101 Rauma (FI)
(72) Inventor: SAVIAINEN, Juhani, FI-26101 Rauma (FI); SAARENKO, Timo, FI-26101 Rauma (FI)
(74) Representative: Seppo Laine Oy
(86) International application number: PCT/FI2010/051099
(87) International publication number: WO 2011/080399

(56) References cited:
- WO-A1-97/14490
- WO-A1-2005/075730
- GB-A- 515 607
- US-A- 3 892 668
- US-A- 4 433 084
- US-A1- 2002 107 168
- US-A1- 2003 145 516
- US-A1- 2003 145 516
- US-A1- 2006 041 027
- US-A1- 2008 185 113
- VINCENT M GIAMPA: "Synthetic fuel emulsion binder and method of preparation", RESEARCH DISCLOSURE, MASON PUBLICATIONS, HAMPSHIRE, GB, vol. 443, no. 72, 1 March 2001 (2001-03-01), XP007127788, ISSN: 0374-4353
- GIAMPA V.M.: 'Synthetic fuel emulsion binder and method of preparation' RESEARCH DISCLOSURE vol. 443, no. 72, 2001, XP007127788

## Description

The present invention relates to use of a tall-oil pitch product. Further, the present invention relates to a use of a product which is generated by using a method of saponifying and hydrolyzing tall-oil pitch.

An enormous number of industrial processes exist in which foaming and emulsifying are detrimental to the separation of products. Foaming appears in liquid-gas systems, and emulsifying occurs in liquid-liquid systems. In such situations, the stability of the interfaces is a problem, but, on the other hand, a lack of interfaces might also be problematic, depending on the circumstances. Thus, skin cream manufacturers want to produce a stable emulsion, whereas the fire brigade wants to generate a stable foam.

During the process of the separation of oil, breaking the emulsion is attempted in the "second emptying" of oil wells. In many operations of wood-processing units, breaking both the foam and the emulsion is attempted.

The foams are stabilised with surface-active agents each molecule of which has both a hydrophilic and a lyophilic part. An additional requirement is that each molecule is large enough. The emulsion is stabilised in a corresponding way, by using a surface-active agent which partly dissolves in both phases. In this case, in equilibrium, the generated size of the emulsion drops is such that the surface-active agent covers the surface of each drop, either with one or just a few layers. The generation of a stable emulsion and a stable foam requires mixing and gas-blowing together with a surface-active agent, the surface tension caused by which agent is not very dependent on its concentration.

Furthermore, these additives must have such a property that they neither harm the materials to be treated nor the processes employed to treat those materials at a later stage. An excellent example of this found in the cellulose industry is the use of silicon-bearing anti-foaming agents. They are very efficient, but they always end up in material flows which, or fractions of which, are later burned, and in the burners they form crusts which are difficult to remove, or they create other problems.

There is a range of anti-foaming agents and foam killers for different conditions. Despite that, the same materials can function as a foamer in some conditions and as a foam killer in others. The question is to find the means and methods of disturbing the film which stabilises the generated surface and which encourages foaming and emulsifying. Typically, such a foam generator is an ordinary soap which is an alkali metal salt of a fatty acid.

It is possible to destroy foam which is generated by soap by means of two separate known techniques. According to one technique, the stabilised film is disturbed by the Marangoni effect, which is a mechanism that comprises surface tension gradients. Surface tension gradients are either temperature-based or concentration-based. According to the second technique and mechanism, the stabilised surface films are punctured, for example by bringing fine particles into the solution. In this case, too, the "puncturing" can, via the Marangonini effect, result in local surface tension gradients in such a way that the surface-active agent disappears or the concentration decreases locally, for example due to adsorption caused by the particles.

In the following, a few examples, found in the patent literature, of the known technology for killing foam and clarifying emulsions are described.

US Patent Specification No. 4,445,971 describes a foam-killer which is a non-ionic propylene oxide molecule which comprises 20-50 propylene oxide groups and which is hydroxyl-ended. This material is used as an efficient foam inhibitor. It is obvious that the foam inhibitor effect is generated in such a way that polar oxygen groups occur in the middle of the molecule, too, not only at the ends.

US Patent Specification No. 3,892,668 describes how it is possible to generate more oil from oil wells that are primarily empty by using an additive which is made from tall-oil pitch. This additive is prepared by bringing the said pitch to react with an alkali at a temperature of 70-110 °C for a period of 16 hours, in which case a water-soluble product is generated. With an aqueous solution of such a product, which solution comprises 10 % of the said pitch in water, the separation and discharging of water from the oil well were improved. The product is used primarily for improving the additional yield from oil wells that have "run dry". In this U.S. patent, the excess alkali is 20-80 % more compared with the equivalent saponification number of pitch. By this means, the quantity of alkali used was large enough to make the tall-oil pitch essentially fully soluble in water.

FI Patent Application No. 20022155 and the corresponding PCT Published Patent Application WO2003/00932 describe how it is possible to improve in a pulp mill the separation of soap from black lye by adding a neutral material-colloid which is stabilised with fatty acids and resin acids. This neutral material is separated from the soap, from which it is extracted by using petroleum ether. The quantity of the neutral material used is 40 parts by weight, and the sodium oleate and the sodium abietate used are 5 parts by weight each. When these components are mixed into water, a stable colloid is generated. By adding 0.02 % of the said mixture (calculated from the quantity of black lye) into the black lye, the optimum clarification is acquired in a period of 18 hours, even though the clarifying starts already after 10 minutes.

Another Finnish patent specification, FI2004188, which corresponds to the international patent application PCT/FI2005/00078, describes the usage of the material, described in the preceding patent, for decreasing the foam. In particular, the foam-decreaser was used in the black lye while that black lye was on its way into the evaporation unit, in which case fewer process disturbances occurred during the evaporation.

The purpose of the present invention is to use a completely new composition based on tall-oil pitch for controlling foaming and for clarifying emulsions.

According to an aspect of the present invention, there is provided use of a tall-oil pitch product which is saponified and hydrolysed with an alkali, and which comprises a stable emulsion or micelle-water mixture, at pulp mills for clarifying soap and/or reducing the foam in the treatment of black lye.

According to another aspect of the invention, there is provided use of a product which is generated by using a method of saponifying and hydrolysing tall-oil pitch, at pulp mills for clarifying soap and/or reducing the foam in the treatment of black lye, wherein said method a mixture is formed of pitch, water and an alkali, which mixture is driven through a mixing area in which sufficiently large mixing and shear forces are directed at the mixture that it is transformed into a stable emulsion or a stable micelle-water mixture, wherein the pitch, the water and the alkali are driven through a mixing area which is formed of a power mixer, in which case at least 2.5 kWh /tonne of raw material mixture, preferably 5-7 kWh/tonne of raw material mixture, is used for mixing and generating the shear forces; wherein alkali or alkali earth metal hydroxide, in particular sodium hydroxide or potassium hydroxide, is used for the saponification and hydrolysis of the tall-oil pitch; wherein approximately 10-100 parts by weight of tall-oil pitch and 100-10 parts by weight of water, and a quantity of excess alkali, which is approximately 1.1-10-fold, especially approximately 1.2-2.5-fold, compared with that which is needed for hydrolysis of pitch, are mixed with each other, an excess of alkali being used for saponification and hydrolysis of fatty acids, resin acids and/or crude tall oil which are comprised in the tall-oil pitch composition, or separately added into it; and wherein the tall-oil pitch is saponified and hydrolysed at least partly, already during the stage when it is driven through the mixing area, in particular the saponification and the hydrolysis are continued by letting the emulsion or the micelle-water mixture settle for a period of at least 1-168 hours, at a temperature of at least 75-95 °C.

The present invention is based on the principle that a mixture is formed of pitch, water and an alkali, which mixture is driven through a mixing area, in which area sufficiently large mixing and shear forces are directed at the mixture that it is possible to transform the tall-oil pitch into a stable emulsion or a stable micelle-water mixture. At the same time, in the mixing area, the tall-oil pitch is partly saponified, in which case as many as possible of the ester compounds in the pitch are broken up in alkaline conditions to form alkali metal salts of carboxyl acids and corresponding neutral alcohol compounds.

Preferably, the pitch, the water and the alkali are first driven for example through a multistage power mixer, in which at least 2.5 kWh/tonne of raw material mixture, preferably 5-7 kWh/tonne, is used for mixing and for generating shear forces.

The present method generates a tall-oil pitch product which is saponified and hydrolysed with an alkali, and which comprises a stable emulsion or a micelle-water mixture. Most suitably, the product is stabilised with soap of fatty acid, resin acid or crude tall oil or with a mixture thereof. Besides these stabilisers, the product can also comprise glycerine or a similar polyol.

It is possible to use the tall-oil pitch, which is saponified by using an alkali, according to the present invention, to clarify the separation of soap at a pulp mill.

More specifically, the use according to the present invention is mainly characterized by what is stated in Claim 1.

The use according to the present invention is, in turn, characterized by what is stated in Claim 9.

Considerable advantages can be achieved with the present invention. Thus, by adding the present product into black lye, it is possible to clarify emulsions. The yield of soap separation can be improved by as much as 50 %. The product reduces foaming, too, during different stages of treatment. Obviously, the pitch-micelles act as antifoamers by generating a local disturbance in a stable foam, and the Marangoni effect takes care of the rest.

As a foam-inhibitor and clarifyer, the product is particularly suitable for processes in pulp mills and/or paper mills, because no foreign substances are brought into the process. It should be noted that, compared with a neutral material-colloid, which is described in the PCT Application PCT/FI2003/000932, the present product is much more economical.

Production of this product is fast. The tall-oil pitch in US Patent No. 3,892,658 was reacted with lye for a period of 16 hours at a temperature of 70-110 °C, whereas the present product can be produced in minutes.

It is also possible to continue the hydrolysing and the saponification after the actual dispersion stage. As a result of the hydrolysing, acids are released from their esters into the dispersion, which acids, for their part, improve the stability of the dispersion.

When acting according to the present disclosure, the pitch of the wood oil is effectively dispersed in the water in such a way that a stable emulsion (or a micelle-water mixture) is generated, without having to add large amounts of other components, such as glycerides sourced from vegetable oils, into the mixture. Thus, at least 50 % by weight, most suitably at least 60 % by weight, especially at least 75 % by weight, for example approximately 80-100 % by weight of the dry matter of the mixture, is generated from tall-oil pitch, which is saponified and hydrolysed with an alkali.

In the following, the present invention will be examined more closely with the aid of a detailed description and a few examples of its application.

Typically, tall-oil pitch (hereinafter also "tall-oil pitch composition") comprises several different components. Generally, tall-oil pitch comprises 23-38 % esters of fatty acids, together with different wood alcohols, and less than 15 % free carboxylic acids (primarily fatty acids and resin acids), and the remainder of the tall-oil pitch composition comprises different neutral materials, such as wood alcohols. All of these components are either poorly soluble or completely insoluble in water, and thus their saponification is slow. Also, alkaline hydrolysis of esterified acids is slow in aqueous solutions.

Furthermore, the molecular weight of tall-oil pitch is approximately 500-1200 Dalton, which means that in a molecule there are many steric obstacles to chemical reactions. This is the reason why, according to US Patent No. 3,892,652, the time required for "neutralising" the pitch was up to 16 hours.

According to the present disclosure, the tall-oil pitch and the alkaline needed for hydrolysis, preferably as an aqueous solution, are mixed in a power mixer, most suitably in a power mixer which has several sequential shear zones.

Here, "shear zones" mean "blades" which pass close to each other and between which large shear forces are generated in the intermediate material.

Examples of such devices are "Cavitron" (supplier v. Hagen Funke GmbH) and "Condux- Universal Mills" (supplier Netzsch-Condux Mahltechnik GmbH).

The energy needed for mixing and for generation of shear forces is at least 2.5 kWh /tonne of raw material mixture, preferably 5-7 kWh/tonne of raw material mixture.

Because of the high intensity in such a mixer, already 1/4-1/5 parts of the reaction takes place in less than one second. The reaction takes place in the chamber of the device.

Even though the temperature is for example 90 °C, microcavitations take place inside the device, in which cavitations temperatures of thousands of degrees Kelvin can be generated in association with the collapsing of the cavitation bubbles. This partly explains how such a power mixer operates. In the mixing zone, the temperature of the material to be processed increases by 3-15 °C. The reason is that, in practice, so much mixing energy is generated by the shear forces in the mixing zone that the temperature of the processed material increases.

The acid number of tall-oil pitch is generally determined by titration of the pitch in an ethanol-toluene solution. In a power mixer, this slow process is carried out without solvents very quickly.

It is possible to use one or more power mixers, whereas in the latter case, the mixers are most suitably arranged in series.

Into the mixing zone, which is formed of the power mixer or the power mixers, hot pitch, water and an alkali are fed as separate flows, which are either mixed with each other in the mixing zone or mixed with each other in a single flow.

The output from the mixing zone is a pitch product of the wood oil, which product comprises an aqueous emulsion or a micelle-water mixture of pitch.

According to an alternative, the reject of the mixing zone, which reject comprises an emulsion or a micelle-water mixture of pitch, includes pitch which is partly hydrolysed and saponified. The degree of hydrolysis is subsequent to the mixing zone at least 10 % by mole.

It is possible to bring the dispersion which is generated in the mixing zone to a second treatment stage in which the hydrolysis and the saponification of pitch are continued by letting the dispersion mixture settle. Typically, the mixture comprises unreacted alkali, which causes the hydrolysis and the saponification to continue. Typically, the mixture is allowed to settle for a period of 10 min-240 h, especially approximately 1-168 h. As the examples below reveal, the degree of hydrolysis of the mixture is increased to at least 50 % by mole, generally already within 24 hours, and to over 90 % by mole within 128 hours. In the settling stage, the temperature of the dispersion is kept preferably at least at approximately 75 °C, most suitably approximately at 80-95 °C. During the settling, the mixture (i.e. emulsion or micelle-water mixture) can be mixed.

After the hydrolysis, the pH value of the mixture is approximately 7-11. Typically, the mixture is slightly alkaline, its pH value being for example 7.3-10.8.

According to the present disclosure, a tall-oil pitch product is generated which is saponified with an alkali, and which comprises a stable emulsion or micelle-water mixture. The product is not translucent, which indicates that the tall-oil pitch is not dissolved in water and does not form a bright solution, as does the composition which is prepared according to US Patent No. 3,892,652.

According to a preferred alternative, the degree of hydrolysis of the pitch product, i.e. the degree of hydrolysis of the acids or the esters that are formed of acids, of which the pitch in part comprises, is at least 50 % by mole, preferably at least 70 % by mole, especially at least 80 % by mole, most suitably at least 90 % by mole and most preferably at least 95 % by mole.

In the present case, the concentration of tall-oil pitch in water is typically approximately 5-70 % by weight of the weight of the emulsion or the micelle-water mixture.

Alkali or alkali earth metal hydroxide, in particular sodium hydroxide or potassium hydroxide, is used for the hydrolysis and saponification of the tall-oil pitch. Typically, approximately 10-100 parts by weight of tall-oil pitch and 100-10 parts by weight of water, and approximately 1.1-10-fold, especially approximately 1.2-2.5-fold excess of alkali, compared with the amount needed for the hydrolysis of the pitch, are mixed with each other.

In the present disclosure, "saponification" means generally a reaction between an alkali and an ester. "Saponification" also comprises generation of salt from free (carboxylic) acids, particularly from long-chained acids, such as fatty acids and resin acids, in which case "soap" means a corresponding salt of the acid. A "saponified product" is, in turn, a product which comprises fatty acids and resin acids together with esters thereof, and which product has been treated with an alkali, as described above.

As described above, hydrolysis, too, takes place in association with the alkali treatment. As part of the process of hydrolysis, esters break up and long-chained compounds are at least to some extent degraded to shorter molecules.

In the two-stage method, hydrolysis takes place both in the mixing stage and in the subsequent settling stage, as described above and in example 3.

The product, which is generated in the reaction between tall-oil pitch and an alkali, is most suitably stabilised with a soap of fatty acid, resin acid or crude tall oil, or with a mixture of these soaps. It comprises for example soap of resin acid or fatty acid or a mixture of these soaps, which is approximately 2-15% by weight of the quantity of dry matter of tall-oil pitch, in order to stabilise the micelles of the tall-oil pitch. It is also possible to replace part of the other stabilising agents with glycerine or a corresponding polyol. However, the quantity of glycerol or the corresponding polyol is at maximum 60 % by weight of the crude tall oil, or of components derived from it, which is used for stabilising.

Into the pitch composition, it is possible to add fatty acids, resin acids and/or crude tall oil which are saponified due to an excess of alkali, in which case in the emulsion or micelle-water mixture a saponified acid-mixture is generated, and which mixture comprises fatty acids, resin acids and alcohol compounds which correspond to their esters, which are broken up in the saponification, and in which case the micelle is surrounded by these saponified acids and/or alcoholic compounds.

As a result of the hydrolysis of pitch, fatty acids and resin acids are released from their esters. These released acids stabilise the mixture. However, it is also possible to add fatty acids and resin acids and mixtures of them, and crude tall oil, before the mixing, after the mixing or both before and after the mixing.

The quantity of the added fatty acids, resin acids and/or crude tall oil is approximately 1-50 % by weight, especially approximately 2-30 % by weight, of the quantity of dry matter contained in the pitch.

The product which is described above and, correspondingly, the composition which is produced with the method described above, are used for example for intensifying the separation of soap from the pulping liquor (in particular black lye) which is used at pulp mills (in particular sulphate cellulose mills).

Generally, the present product or the composition which is produced with the present method is used at pulp mills (sulphate cellulose mills) in order to clarify the soap and/or to reduce the foam in the treatment of black lye.

In the described objects, generally the product used is approximately 0.001-10 % by weight, especially approximately 0.001-1.0 % by weight, for example 0.01-0.1 % by weight, of the quantity of soap.

It is also possible to use the product in foaming processes (flotation processes), for example for treating process waters in the mining industry. In this case, the product is most suitable as a foaming agent.

### Example 1

Tall-oil pitch was driven into a power mixer at a concentration of 35 % in water, together with a NaOH solution, so that the excess NaOH was 20 % (of the equivalent quantity of saponification). The temperature was 90 °C and rate of the feed 4.5 tonne/h.

The power mixer used was a Cavitron device, the engine of which requires an input power of 25 kW. The power mixer had three rotor zones and three stator zones.

While the solution generated was being left to settle in a container for a period of one month, it was found that after two weeks, an emulsion had risen to the surface of a 1 m layer of liquid, the dry matter (organic substance) percentage of which emulsion was 50 % by weight, and another emulsion had settled onto the bottom, the dry matter (organic substance) percentage of which was 29 % by weight, when the starting situation had been 35 % of dry matter (organic substance). This saponified pitch was a black emulsion which was only slightly transparent. This example shows that the emulsion is well stabilised, because it did not form a uniform organic phase.

### Example 2

It is possible to use the product which was prepared in example 1 for separation of soap.

Generally, in pulp cooking in sulphate mills it is possible to recover directly from the black lye approximately 55 kg of soap per tonne of cellulose, approximately 20 kg are recovered in the intermediate stage of the evaporation of black lye, and approximately 1-4 kg of soap remains in the strong black lye.

The product described in example 1, both as a week-old product and as a month-old product, was used for "synthetic" separation of soap. The separation of soap was carried out by adding 0.25 % parts of saponified pitch into the simulated black lye. (There was no lignin in the lye, in its place was Na₂SO₄, 21 % by weight and 10 % by weight of Na salt dissolved in a fatty acid mixture.)

The direct yield was over 30 % of what rose by itself to the surface of the synthetic test solution.

The saponified pitch was dissolved completely in the separated soap layer; a bright transparent light-brown phase was visible on the surface of the water.

Based on the results, it is possible to conclude that when using a product according to the present disclosure, tapping for soap separation during evaporation is not needed at all, instead the soap is almost totally recovered already during the separation of the soap of weak lye.

### Example 3

In a new test, a Cavitron power mixer was used which comprised three rotor zones and three stator zones, the input power was 25 kW, the rate of the feed 4500 kg/h, the temperature 82 °C, and the pitch percentage 17 %.

The properties of the pitch which was introduced into the treatment were: the acid number was 27.3, of which resin acids were 10.3, and the saponification number was 91.2. At the same time, a 50 % solution of the lye was introduced at 107 kg/h, which was approximately a two-fold excess compared with the saponification number.

Furthermore, the production method of the generated "pitch soap" is especially fast compared with other methods. Here, the cavitation generated by the power mixer results in the following conversions:

**Table 1. Conversion of tall-oil pitch**

| | Initial material | Cavitron output, 90 °C | After 24 h settling, 90 °C | After 120 h settling, 90°C |
|---|---|---|---|---|
| Conversion, % by mole | 0 | 14,3 | 55,8 | 96,2 |

The quantity of NaOH in the above test was the double that of an equivalent quantity which corresponds to the saponification number.

Tests were also carried out with concentrations of 50 % pitch soap. In this case, an emulsion/micelle-mixture rose slowly to the surface of the storage vessel, to as much as a dry matter percentage of 70 %. During a period of 14 days, 17 % of the dry matter (i.e. organic substance) rose to the surface. A composition in which the percentage of organic substance was 35 % by weight was generated onto the bottom. In neither case did the micelles break up, i.e. form a homogeneous phase.

In the above test, 10 % of crude tall oil was used as the stabilizer, and in the other test, half of it was replaced with glycerine, which gave the same results. Glycerine, too, is one of the natural substances of the process, and in a tall oil distillery it is removed in the first dewatering column or evaporator.

The quantities of the pitch used in the laboratory tests were most suitably approximately 0.01-0.05 % by weight of the quantity of the soap which was dissolved in the black lye. In factory conditions, it is possible to use neutralised pitch generally approximately 0.001-1 % by weight, especially approximately 0.01- 0.1 % by weight, of the quantity of soap.

As an antifoamer, the product is particularly suitable for processes in pulp mills and/or paper mills, because no foreign substances are brought into the process. The quantity of the anti-foaming agent can vary between a fraction of one per cent and several per cent of the settled volume of the foam.

## Claims

1. Use of a tall-oil pitch product which is saponified and hydrolysed with an alkali, and which comprises a stable emulsion or micelle-water mixture, at pulp mills for clarifying soap and/or reducing the foam in the treatment of black lye.

2. The use according to Claim 1, **characterize**d in that at least 50 % by weight, most suitably at least 60 % by weight, especially at least 75 % by weight, for example approximately 80-100 %, of the tall-oil pitch product's dry matter is sourced from tall-oil pitch which is saponified and hydrolysed with an alkali.

3. The use according to Claim 1 or 2, **characterize**d in that the tall-oil pitch product is stabilised with a soap of fatty acid, resin acid or crude tall oil, or a mixture thereof.

4. The use according to any of Claims 1-3, **characterized in that** the tall-oil pitch product comprises a soap of resin acid or fatty acid or a mixture thereof, approximately 2-15 % by weight of the dry matter quantity of the tall-oil pitch, in order to stabilise the micelles of the tall-oil pitch.

5. The use according to any of Claims 1-4, **characterized in that** the tall-oil pitch product comprises glycerine or a corresponding polyol, in which case the quantity of the glycerole or the corresponding polyol is preferably at maximum 60 % by weight of the crude tall oil, or of components derived from it, which is used for stabilising.

6. The use according to any of Claims 1-5, **characterized in that** the concentration of tall-oil pitch in water is 5-60 % by weight of the weight of the emulsion or the micelle-water mixture.

7. The use according to any of Claims 1-6, **characterized in that** the tall-oil pitch product is stabilised with a soap of fatty acid, resin acid or crude tall oil or a mixture of these soaps, which soap is generated by saponifying fatty acid, resin acid and/or crude tall oil which is comprised in or added into the tall-oil pitch to be treated.

8. The use according to any of Claims 1-7, **characterized in that** the tall-oil pitch product's degree of hydrolysis is at least 50 % by mole, preferably at least 70 % by mole, especially at least 80 % by mole, most suitably at least 90 % by mole, and most preferably at least 95 % by mole.

9. Use of a product which is generated by using a method of saponifying and hydrolysing tall-oil pitch, at pulp mills for clarifying soap and/or reducing the foam in the treatment of black lye, **characterized in that** in said method a mixture is formed of pitch, water and an alkali, which mixture is driven through a mixing area in which sufficiently large mixing and shear forces are directed at the mixture that it is transformed into a stable emulsion or a stable micelle-water mixture,
wherein the pitch, the water and the alkali are driven through a mixing area which is formed of a power mixer, in which case at least 2.5 kWh /tonne of raw material mixture, preferably 5-7 kWh/tonne of raw material mixture, is used for mixing and generating the shear forces;
wherein alkali or alkali earth metal hydroxide, in particular sodium hydroxide or potassium hydroxide, is used for the saponification and hydrolysis of the tall-oil pitch;
wherein approximately 10-100 parts by weight of tall-oil pitch and 100-10 parts by weight of water, and a quantity of excess alkali, which is approximately 1.1-10-fold, especially approximately 1.2-2.5-fold, compared with that which is needed for hydrolysis of pitch, are mixed with each other, an excess of alkali being used for saponification and hydrolysis of fatty acids, resin acids and/or crude tall oil which are comprised in the tall-oil pitch composition, or separately added into it; and
wherein the tall-oil pitch is saponified and hydrolysed at least partly, already during the stage when it is driven through the mixing area, in particular the saponification and the hydrolysis are continued by letting the emulsion or the micelle-water mixture settle for a period of at least 1-168 hours, at a temperature of at least 75-95 °C.

10. The use according to Claim 9, **characterized in that** in said method the quantity of mixing energy which is brought through the shear forces into the mixing area is large enough to increase the temperature of the material to be processed by 3-15 °C.

11. The use according to claim 9 or 10, **characterized in that** in said method a tall-oil pitch emulsion or micelle-water mixture is produced in which the concentration of tall-oil pitch is approximately 5-60 % by weight of the weight of the emulsion or the mixture.

12. The use according to any of claims 1-11, **characterized in that** the product is used for intensifying the separation of soap.

13. The use according to any of claim 1-12, **characterized in that** the quantity of the product used is 0.001-10 % by weight, especially approximately 0.01-5 % by weight, of the quantity of soap.

## Patentansprüche

1. Verwendung eines Tallölpechprodukts, das mit einem Alkali verseift und hydrolysiert ist und das eine beständige Emulsion oder Micellen-Wassermischung umfasst, in Zellstofffabriken zum Klären von Seife und/oder Reduzieren des Schaums bei der Behandlung von Schwarzlauge.

2. Verwendung nach Anspruch 1, **dadurch gekennzeichnet, dass** mindestens 50 Gew.-%, am geeignetsten mindestens 60 Gew.-%, insbesondere mindestens 75 Gew.-%, beispielsweise etwa 80-100 % der Trockensubstanz des Tallölpechprodukts aus Tallölpech beschafft wird, das mit einem Alkali verseift und hydrolysiert ist.

3. Verwendung nach Anspruch 1 oder 2, **dadurch gekennzeichnet, dass** das Tallölpechprodukt mit einer Seife von Fettsäure, Harzsäure oder rohem Tallöl oder einer Mischung davon stabilisiert ist.

4. Verwendung nach einem der Ansprüche 1-3, **dadurch gekennzeichnet, dass** das Tallölpechprodukts eine Seife von Harzsäure oder Fettsäure oder eine Mischung davon, etwa 2-15 Gew.-% der Menge an Trockensubstanz des Tallölpechs umfasst, um die Micellen des Tallölpechs zu stabilisieren.

5. Verwendung nach einem der Ansprüche 1-4, **dadurch gekennzeichnet, dass** das Tallölpechprodukt Glycerin oder ein entsprechendes Polyol umfasst, in welchem Fall die Menge des Glycerins oder des entsprechenden Polyols, die zum Stabilisieren verwendet wird, bevorzugt höchstens 60 Gew.-% des rohen Tallöls oder von Komponenten, die davon abgeleitet sind, beträgt,

6. Verwendung nach einem der Ansprüche 1-5, **dadurch gekennzeichnet, dass** die Konzentration von Tallölpech in Wasser 5-60 Gew.-% des Gewichts der Emulsion oder der Micellen-Wassermischung beträgt.

7. Verwendung nach einem der Ansprüche 1-6, **dadurch gekennzeichnet, dass** das Tallölpechprodukt mit einer Seife von Fettsäure, Harzsäure oder rohem Tallöl oder einer Mischung dieser Seifen stabilisiert ist, welche Seife durch Verseifen von Fettsäure, Harzsäure und/oder rohem Tallöl erzeugt wird, die/das in dem zu behandelnden Tallölpech enthalten ist oder dazu zugegeben wird.

8. Verwendung nach einem der Ansprüche 1-7, **dadurch gekennzeichnet, dass** der Hydrolysegrad des Tallölpechprodukts mindestens 50 Mol-%, bevorzugt mindestens 70 Mol-%, insbesondere mindestens 80 Mol-%, am geeignetsten mindestens 90 Mol-% und am bevorzugtest mindestens 95 Mol-% beträgt.

9. Verwendung eines Produkts, das durch Anwenden eines Verfahrens zum Verseifen und Hydrolysieren von Tallölpech in Cellulosefabriken zum Klären von Seife und/oder Reduzieren des Schaums bei der Behandlung von Schwarzlauge erzeugt wird, **dadurch gekennzeichnet, dass** bei dem Verfahren eine Mischung aus Pech, Wasser und einem Alkali gebildet wird, welche Mischung durch einen Mischbereich getrieben wird, in dem ausreichend hohe Misch- und Scherkräfte auf die Mischung gerichtet werden, dass sie zu einer beständigen Emulsion oder einer beständigen Micellen-Wassermischung umgewandelt wird,
wobei das Pech, das Wasser und das Alkali durch einen Mischbereich getrieben werden, der durch einen elektrischen Mischapparat gebildet ist, in welchem Fall mindestens 2,5 kWh/Tonne Rohmaterialmischung, bevorzugt 5-7 kWh/Tonne Rohmaterialmischung, zum Mischen und Erzeugen der Scherkräfte angewendet werden;
wobei Alkali- oder Erdalkalimetallhydroxid, insbesondere Natriumhydroxid oder Kaliumhydroxid, für die Verseifung und Hydrolyse des Tallölpechs verwendet wird;
wobei etwa 10-100 Gewichtsteile Tallölpech und 100-10 Gewichtsteile Wasser und eine Menge an überschüssigem Alkali, die etwa das 1,1-10-fache, insbesondere etwa 1,2-2,5-fache im Vergleich mit derjenigen ist, die zur Hydrolyse von Pech benötigt wird, beträgt, miteinander gemischt werden, wobei ein Überschuss an Alkali für die Verseifung und Hydrolyse von Fettsäuren, Harzsäuren und/oder rohem Tallöl, die in der Tallölpechzusammensetzung enthalten sind, verwendet oder getrennt hineingegeben wird; und
wobei das Tallölpech zumindest teilweise schon während der Stufe verseift und hydrolysiert wird, wenn es durch den Mischbereich getrieben wird, wobei die Verseifung und Hydrolyse insbesondere durch Absetzenlassen der Emulsion oder Micellen-Wassermischung für eine Zeitspanne von mindestens 1-168 Stunden bei einer Temperatur von mindestens 75-95 °C fortgesetzt werden.

10. Verwendung nach Anspruch 9, **dadurch gekennzeichnet, dass** bei dem Verfahren die Menge an Mischenergie, die durch die Scherkräfte in den Mischbereich eingebracht wird, ausreichend hoch ist, um die Temperatur des zu verarbeitenden Material um 3-15 °C zu erhöhen.

11. Verwendung nach Anspruch 9 oder 10, **dadurch gekennzeichnet, dass** das bei dem Verfahren eine Tallölpechemulsion oder Micellen-Wassermischung hergestellt wird, in der die Konzentration von Tallölpech etwa 5-60 Gew.-% des Gewichts der Emulsion oder der Mischung beträgt.

12. Verfahren nach einem der Ansprüche 1-11, **dadurch gekennzeichnet, dass** das Produkt zum Verstärken der Trennung von Seife verwendet wird.

13. Verwendung nach einem der Ansprüche 1-12, **dadurch gekennzeichnet, dass** die Menge des verwendeten Produkts 0,001-10 Gew.-%, insbesondere etwa 0,01-5 Gew.-%, der Menge an Seife beträgt.

## Revendications

1. Utilisation d'un produit de brai de tallol qui est saponifié et hydrolysé avec une base, et qui comprend une émulsion ou un mélange micelles-eau stable, dans des usines de pâte à papier pour clarifier un savon et/ou réduire la mousse dans le traitement d'une lessive noire.

2. Utilisation selon la revendication 1, **caractérisée en ce qu'**au moins 50 % en poids, tout particulièrement au moins 60 % en poids, en particulier au moins 75 % en poids, par exemple d'environ 80 à 100 %, de la matière sèche du produit de brai de tallol proviennent d'un brai de tallol qui est saponifié et hydrolysé avec une base.

3. Utilisation selon la revendication 1 ou 2, **caractérisée en ce que** le produit de brai de tallol est stabilisé avec un savon d'acide gras, d'acide de résine ou de tallol brut, ou un mélange de ceux-ci.

4. Utilisation selon l'une quelconque des revendications 1 à 3, **caractérisée en ce que** le produit de brai de tallol comprend un savon d'acide de résine ou d'acide gras ou un mélange de ceux-ci, à raison d'environ 2 à 15 % en poids de la quantité de matière sèche du brai de tallol, afin de stabiliser les micelles du brai de tallol.

5. Utilisation selon l'une quelconque des revendications 1 à 4, **caractérisée en ce que** le produit de brai de tallol comprend de la glycérine ou un polyol correspondant, auquel cas la quantité du glycérol ou du polyol correspondant est de préférence au maximum de 60 % en poids du tallol brut, ou des composants dérivés de celui-ci, qui est utilisé pour une stabilisation.

6. Utilisation selon l'une quelconque des revendications 1 à 5, **caractérisée en ce que** la concentration du brai de tallol dans l'eau est de 5 à 60 % en poids du poids de l'émulsion ou du mélange micelles-eau.

7. Utilisation selon l'une quelconque des revendications 1 à 6, **caractérisée en ce que** le produit de brai de tallol est stabilisé avec un savon d'acide gras, d'acide de résine ou de tallol brut ou un mélange de ces savons, savon qui est généré par saponification d'un acide gras, d'un acide de résine et/ou de tallol brut qui est compris dans ou ajouté au brai de tallol à traiter.

8. Utilisation selon l'une quelconque des revendications 1 à 7, **caractérisée en ce que** le degré d'hydrolyse du produit de brai de tallol est d'au moins 50 % en moles, de préférence d'au moins 70 % en moles, en particulier d'au moins 80 % en moles, tout particulièrement d'au moins 90 % en moles et tout préférablement d'au moins 95 % en moles.

9. Utilisation d'un produit qui est généré à l'aide d'un procédé de saponification et d'hydrolyse de brai de tallol, dans des usines de pâte à papier pour clarifier un savon et/ou réduire la mousse dans le traitement d'une lessive noire, **caractérisée en ce que** dans ledit procédé un mélange est formé de brai, d'eau et d'une base, mélange qui est envoyé dans une zone de mélange dans laquelle des forces de mélange et de cisaillement suffisamment importantes sont dirigées sur le mélange qui est transformé en une émulsion stable ou un mélange micelles-eau stable,
dans laquelle le brai, l'eau et la base sont envoyés dans une zone de mélange qui est formé d'un mélangeur de puissance, auquel cas au moins 2,5 kWh/tonne de mélange de matière première, de préférence 5 à 7 kWh/tonne de mélange de matière première, sont utilisés pour mélanger et générer les forces de cisaillement ;
dans laquelle une base ou un hydroxyde de métal alcalin, en particulier l'hydroxyde de sodium ou l'hydroxyde de potassium, est utilisé pour la saponification et l'hydrolyse du brai de tallol ;
dans laquelle environ 10 à 100 parties en poids de brai de tallol et 100 à 10 parties en poids d'eau, un certaine quantité de base en excès, qui est environ 1,1 à 10 fois, en particulier environ 1,2 à 2,5 fois, celle qui est nécessaire pour l'hydrolyse du brai, sont mélangées les unes avec les autres, un excès de base étant utilisé pour la saponification et l'hydrolyse des acides gras, des acides de résine et/ou le brai de tallol brut qui sont compris dans la composition de brai de tallol ou ajoutés séparément à celle-ci ; et
dans laquelle le brai de tallol est saponifié et hydrolysé au moins partiellement, déjà pendant le stade où il est envoyé dans la zone de mélange, en particulier la saponification et l'hydrolyse sont poursuivis en laissant l'émulsion ou le mélange micelles-eau reposer pendant une période d'au moins 1 à 168 heures, à une température d'au moins 75 à 95 ° C.

10. Utilisation selon la revendication 9, **caractérisée en ce que** dans ledit procédé la quantité d'énergie de mélange qui est amenée par les forces de cisaillement dans la zone de mélange est assez importante pour accroître la température de la matière à traiter de 3 à 15 °C.

11. Utilisation selon la revendication 9 ou 10, **caractérisée en ce que** dans ledit procédé une émulsion de brai de tallol ou un mélange micelles-eau est produit dans lequel la concentration du brai de tallol est d'environ 5 à 60 % en poids du poids de l'émulsion ou du mélange.

12. Utilisation selon l'une quelconque des revendications 1 à 11, **caractérisée en ce que** le produit est utilisé pour intensifier la séparation d'un savon.

13. Utilisation selon l'une quelconque des revendications 1 à 12, **caractérisée en ce que** la quantité de produit utilisée est de 0,001 à 10 % en poids, en particulier d'environ 0,01 à 5 % en poids, de la quantité de savon.
